# EUROPÄISCHE PATENTSCHRIFT

(11) **EP 3 227 028 B1**
(45) Veröffentlichungstag und Bekanntmachung des Hinweises auf die Patenterteilung: **01.05.2019**
(21) Anmeldenummer: 15849807.1
(22) Anmeldetag: 04.12.2015
(51) Int. Cl.: B04B 9/12, F16C 37/00, F16C 19/52, F16C 35/04

(54) **ZENTRIFUGE MIT TEMPERIERTEM LAGER**
CENTRIFUGE HAVING A TEMPERATURE-CONTROLLED BEARING
CENTRIFUGEUSE COMPORTANT UN PALIER THERMORÉGULÉ

(30) Priorität: 05.12.2014 DE 102014018058
(43) Veröffentlichungstag der Anmeldung: 11.10.2017
(73) Patentinhaber: Krettek, Guntram, 41749 Viersen (DE)
(72) Erfinder: Krettek, Guntram, 41749 Viersen (DE)
(74) Vertreter: Hauck Patentanwaltspartnerschaft mbB
(86) Internationale Anmeldenummer: PCT/DE2015/000578
(87) Internationale Veröffentlichungsnummer: WO 2016/086913

(56) Entgegenhaltungen:
- EP-A1- 0 016 584
- EP-A1- 2 181 770
- DE-B- 1 208 734
- US-A- 5 004 540

## Beschreibung

Die vorliegende Erfindung betrifft eine Zentrifuge mit einem stationären Außengehäuse, einer im Außengehäuse angeordneten und fliegend gelagerten Schleudertrommel, einem Lagergehäuse, einer vertikal angeordneten, sich von unten durch das Lagergehäuse erstreckenden Welle zum Rotierenlassen der Schleudertrommel und einem am Lagergehäuse angeordneten Lager für die Welle, das eine obere und eine untere Lagereinheit umfasst, die im Abstand voneinander angeordnet sind.

Eine derart ausgebildete Zentrifuge ist bekannt. Beispielsweise lässt sich eine solche Zentrifuge der DE 199 25 082 A1 entnehmen. Die sich nach unten aus dem Lagergehäuse heraus erstreckende Welle ist über eine geeignete Kupplungseinrichtung mit einem Elektromotor verbunden, der die Welle und damit die hiermit verbundene Schleudertrommel antreibt.

Die heutzutage auf dem Markt befindlichen Zentrifugen arbeiten mit immer größeren Drehzahlen. Hierdurch werden die Lagereinrichtungen der Zentrifugen immer größeren Temperaturbeanspruchungen ausgesetzt, die sich nachteilig auf die Zentrifugenkonstruktion und/oder das Schleuderprodukt auswirken und zu entsprechenden Materialbeeinträchtigungen führen können. Bei der vorstehend beschriebenen Zentrifuge sind zur Lagerung der Welle eine obere und eine untere Lagereinheit vorgesehen, bei denen es sich beispielsweise um als Kugel- oder Rollenlager ausgebildete Wälzlager handeln kann.

Aus der EP 2 181 770 A1 ist eine Zentrifuge der eingangs beschriebenen Art bekannt, bei der zwischen der oberen und unteren Lagereinheit und zwischen Lagergehäuse und Welle ein mit einem Schutzgas gefüllter Ringraum mit einer Gaszuführ- und einer Gasabführeinrichtung vorgesehen ist. Ferner ist zwischen der oberen Lagereinheit und der Schleudertrommel und zwischen Welle und Lagergehäuse eine mit Schutzgas gefüllte Vorkammer angeordnet. Auch weist die Zentrifuge eine Kühleinrichtung auf, die eine Kühlmittelzuführung und eine Kühlmittelableitung besitzt.

Aus der DE 12 08 734 B ist eine Rühr-, Misch- und Dispergiervorrichtung bekannt, die einen Kühlmantel aufweist, dessen Versorgung durch einen Stutzen erfolgen kann. Es ist daher eine Ringkammer mit Kühlmantel vorgesehen.

Der vorliegenden Erfindung liegt die Aufgabe zugrunde, eine Zentrifuge der eingangs beschriebenen Art zur Verfügung zu stellen, deren Lager eine besonders geringe Temperaturbelastung aufweist.

Diese Aufgabe wird erfindungsgemäß durch eine Zentrifuge gemäß Patentanspruch 1 gelöst.

Die vorliegende Erfindung basiert auf dem Grundgedanken, die Lagereinrichtung der Welle mit einem Schutzgas zu beaufschlagen, das einerseits die entsprechende Funktion der vorgesehenen Dichtungen garantiert, d.h. die vorgesehenen Dichtungen entsprechend unter Druck setzt, und das andererseits zum Abtransport der im Lagerbereich im Betrieb der Zentrifuge erzeugten Wärme dient. Ferner wird hierdurch eine geeignete Temperierung erreicht und Kondensatbildung vermieden. Hierzu sieht die Erfindung zwischen der oberen und unteren Lagereinheit und zwischen Lagergehäuse und Welle einen mit dem Schutzgas gefüllten Ringraum vor. Dieser Ringraum umgibt die Welle und steht mit beiden Lagereinheiten in Kontakt, so dass die im Lagerbereich erzeugte Wärme auf das Schutzgas im Ringraum übertragen und abtransportiert werden kann. Der Ringraum weist Gaszuführ- und Gasabführeinrichtungen auf, so dass das Schutzgas den Ringraum durchströmen und hierbei Wärmeenergie aufnehmen kann.

Ferner ist erfindungsgemäß das Lagergehäuse als Doppelmantel ausgebildet und weist benachbart zu dem mit Schutzgas gefüllten Ringraum einen mit einem Kühlmittel gefüllten Ringraum mit einer Kühlmittelzuführ- und Kühlmittelabführeinrichtung auf. Dieser innerhalb des Lagergehäuses angeordnete Ringraum ist angrenzend an den mit Schutzgas gefüllten Ringraum angeordnet und sorgt durch das in seinem Ringraum angeordnete Kühlmittel für eine Temperierung des im benachbarten Ringraum angeordneten Schutzgases. Das Kühlmittel durchströmt den Ringraum und nimmt dabei Wärmeenergie von der Umgebung, insbesondere vom benachbarten Schutzgas, auf und leitet diese Wärmeenergie ab. Das Wellenlager wird daher temperiert.

Als Schutzgas kann beispielsweise Druckluft oder ein geeignetes Inertgas, wie Stickstoff, Verwendung finden. Als Kühlmittel werden beispielsweise spezielle Kühlsolen eingesetzt. Auch Wasser kann als Kühlmittel verwendet werden, wobei durch die Verwendung von erwärmtem Wasser bei Beginn des Betriebes der Zentrifuge eine anfänglich bessere Lagerschmierung erreicht werden kann.

Zwischen der oberen Lagereinheit und der Schleudertrommel und zwischen Welle und Lagergehäuse ist eine mit Schutzgas gefüllte Vorkammer mit einer Gaszuführ- und einer Gasabführeinrichtung angeordnet. Eine solche mit Schutzgas gefüllte Vorkammer findet zusätzlich zu der vorstehend erwähnten Ringkammer Verwendung und dient zur Abdichtung und Temperierung des Bereiches oberhalb der oberen Lagereinheit, insbesondere des Bereiches zwischen Lagerdeckel und Welle. Diese Vorkammer ist über geeignete Dichtungen abgedichtet, und die Zuführung und Abführung des Schutzgases in der Vorkammer erfolgt vorzugsweise über geeignete Bohrungen im Lagerdeckel.

Der mit Kühlmittel gefüllte Ringraum steht mit einem Kühlmittelkreis und einer Kühlmittelumwälzeinrichtung in Verbindung. Auf diese Weise kann das Kühlmittel durch den Ringraum des Lagergehäuses umgewälzt werden, um den Lagerbereich mit Schutzgas zu kühlen bzw. zu temperieren.

Auch der mit Schutzgas gefüllte Ringraum und/oder die mit Schutzgas gefüllte Vorkammer stehen mit einem Schutzgaskreis und einer Schutzgasumwälzeinrichtung in Verbindung.

Ein wesentliches Merkmal der Erfindung stellt die Tatsache dar, dass das Wellenlager in Bezug auf seine Temperierung bzw. Klimatisierung in Abhängigkeit von diversen Betriebsparametern gesteuert bzw. geregelt werden kann. So kann beispielsweise die Kühlung des Lagers in Abhängigkeit von der Prozesstemperatur, der Prozesszeit, der Prozess-g (Schleuderfaktor), der Außentemperatur etc. geregelt werden. Hierzu weist die Zentrifuge eine Sensorik zur Erfassung der Temperatur und/oder des Druckes des Kühlmittels und/oder des Schutzgases und eine von der Sensorik angesteuerte Steuereinrichtung zur Betätigung der Kühlmittel- und/oder Schutzgasumwälzeinrichtung in Abhängigkeit von der von der Sensorik erfassten Kühlmittel- und/oder Schutzgastemperatur und/oder des entsprechenden Druckes auf. Es kann daher sowohl der Kühlmittelkreis als auch der Schutzgaskreis temperaturmäßig und druckmäßig überwacht und entsprechend geregelt werden.

Der Kühlmittelkreis und/oder der Schutzgaskreis können ferner einen Wärmetauscher enthalten, um die transportierte Wärmeenergie sehr rasch abzuführen und/oder zu nutzen.

Erfindungsgemäß ist eine Lagereinheit oder sind beide Lagereinheiten mit einer Sensorik zur Temperaturüberwachung versehen. Hierbei wird die Temperatur der Lagereinheit mittels eines in deren Nähe angeordneten Sensors erfasst und an eine Steuereinheit weitergegeben, die in Abhängigkeit von der erfassten Temperatur die Umwälzeinrichtung des Kühlmittelkreises und/oder Schutzgaskreises ansteuert und diese in Abhängigkeit von der erfassten Lagertemperatur betätigt, um das Kühlmittel und/oder Schutzgas entsprechend umzuwälzen.

Die Schutzgaszuführung für den entsprechenden Ringraum erfolgt vorzugsweise über eine im unteren Bereich des Ringraumes angeordnete Bohrung. Als Gasabführeinrichtung des mit dem Schutzgas gefüllten Ringraumes kann die Fett/Ölablassbohrung einer Lagereinheit genutzt werden. Was die mit Schutzgas gefüllte Vorkammer anbetrifft, so sind hier vorzugsweise separate Bohrungen (durch den Lagerdeckel) zur Zu- und Abführung des Schutzgases vorgesehen. Ferner ist das Lagergehäuse mit Bohrungen versehen, die die Kühlmittelzuführ- und Kühlmittelabführeinrichtungen für den entsprechenden Ringraum bilden.

Die Welle kann mindestens eine Gleitringdichtung aufweisen. Mit einer derartigen Dichtung können beispielsweise der an die Welle angrenzende Ringraum und/oder die Vorkammer ausgestattet sein. Die Dichtung kann mit einer Sensorik versehen sein.

Das Schutzgas und/oder das Kühlmittel der beiden Ringräume und/oder der Vorkammer können unter erhöhtem Druck stehen. Mit einem derartigen Überdruck bzw. Sperrdruck kann das Eindringen von Prozessmedien jeglicher Art verhindert werden. Zwischen Zentrifugenlagerung und Prozessgehäuse kann daher eine Druckdifferenz aufgebaut werden. Ferner kann die Zentrifuge eine Einrichtung zur Erfassung des Schutzgas- und/oder Kühlmittelstandes und/oder -verbrauches aufweisen. Dies kann beispielsweise auf visuelle Art möglich sein. Es können aber auch Einrichtungen zur messtechnischen Erfassung vorgesehen sein, beispielsweise ein entsprechender Leckagebehälter, der auch außerhalb der Zentrifugenlagerung vorgesehen sein kann.

Anstelle von Überdruck kann auch mit Unterdruck gearbeitet werden, um ein Austreten des Produktes zu verhindern, und zwar zumindest in der Vorkammer.

In den Patentansprüchen sowie in der Beschreibung wurde von einer vertikal angeordneten Welle mit einer oberen und unteren Lagereinheit ausgegangen. Die Erfindung schließt jedoch nicht aus, dass es sich auch um eine liegend angeordnete Zentrifuge (Trommel) handeln kann, die eine horizontal angeordnete Welle aufweist. Die vorstehend verwendeten Begriffe "vertikal" und "oben" und "unten" sind daher in diesem Fall durch "horizontal" und "erste" und "zweite" Lagereinheit zu ersetzen.

Die Erfindung wird nachfolgend anhand eines Ausführungsbeispieles in Verbindung mit der Zeichnung im Einzelnen erläutert. Es zeigen:
- Figur 1: einen schematischen Längsschnitt durch eine Zentrifuge; und
- Figur 2: einen Vertikalschnitt in vergrößertem Maßstab durch das als Patronenlager ausgebildete Wellenlager der Zentrifuge der Figur 1.

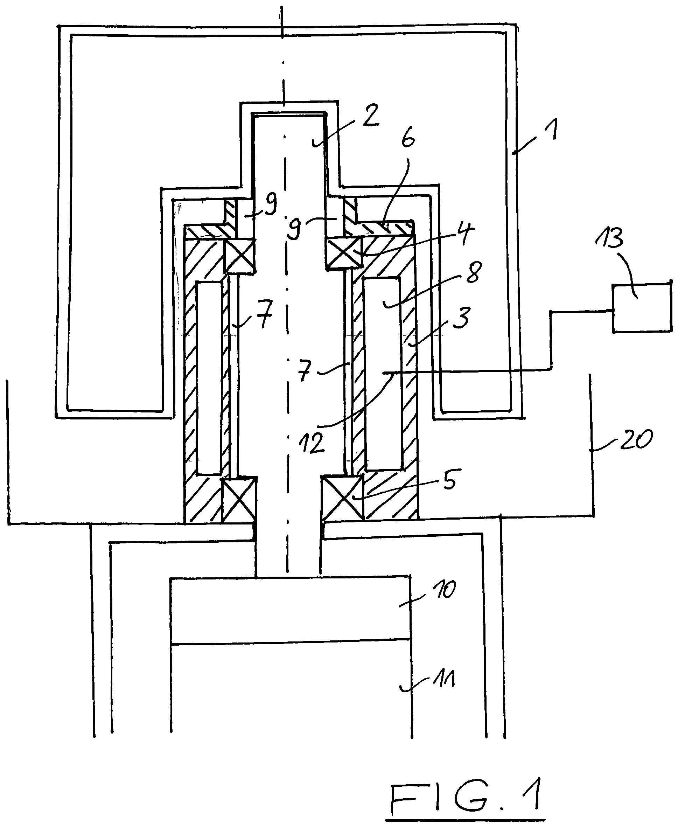

Die in Figur 1 schematisch dargestellte Zentrifuge besitzt ein stationäres Außengehäuse 20 (nur teilweise angedeutet), eine im Außengehäuse 20 angeordnete und fliegend gelagerte Schleudertrommel 1, ein Lagergehäuse 3, eine vertikal angeordnete, sich von unten durch das Lagergehäuse 3 erstreckende Welle 2 zum Rotierenlassen der Schleudertrommel 1 und ein am Lagergehäuse 3 angeordnetes Lager für die Welle 2, das eine obere und eine untere Lagereinheit 4, 5 umfasst, die im Abstand voneinander angeordnet sind. Bei den Lagereinheiten 4, 5 kann es sich beispielsweise um geeignete Kugellager handeln.

Die Schleudertrommel 1 weist in ihrem Inneren eine Ausnehmung auf, in die sich das Lagergehäuse 3 und die zentrisch im Lagergehäuse angeordnete Welle 2 erstrecken. Das obere Ende der Welle 2 ist in geeigneter Weise mit der Schleudertrommel 1 verbunden, beispielsweise durch Reibeingriff. Die Welle 2 wird von einem Elektromotor 11 über eine geeignete Kupplungseinrichtung 10 angetrieben.

Wie in der Figur zu erkennen ist, ist zwischen den beiden Lagereinheiten 4, 5 und der Welle 2 sowie dem die Welle ringförmig umgebenden Lagergehäuse 3 ein Ringraum 7 vorgesehen, der mit einem geeigneten Schutzgas, beispielsweise Druckluft, gefüllt ist. Über eine nichtgezeigte Bohrung wird die Druckluft in den Ringraum 7 im mittleren Teil desselben eingeführt und verlässt den Ringraum 7 über die Fettablassbohrung der unteren Lagereinheit 5. Von dort aus kann das Schutzgas in die Atmosphäre abgegeben oder in einen Schutzgaskreis eingeführt werden, von dem es dann wieder dem Ringraum 7 zugeführt wird.

Das Lagergehäuse 3 ist in der Form eines Doppelmantels ausgebildet und weist ebenfalls einen Ringraum 8 auf, der radial benachbart zum mit dem Schutzgas gefüllten Ringraum 7 angeordnet ist. Der Ringraum 8 im Lagergehäuse ist mit einem geeigneten Kühlmittel, beispielsweise Wasser, gefüllt. Der Ringraum 8 ist ebenfalls an einen Kreis angeschlossen, durch den das Kühlmittel umgewälzt wird. Es wird über geeignete Bohrungen (nicht gezeigt) im Lagergehäuse 3 in den Ringraum 8 eingeführt und von diesem abgeführt.

Der hier nicht im Einzelnen dargestellte Kühlmittelkreis weist eine Kühlmittelumwälzeinrichtung (nicht gezeigt) auf, die eine Umwälzung des Kühlmittels durch den Ringraum 8 bewirkt.

Am oberen Ende des Lagergehäuses 3 ist ein im Vertikalschnitt winkelförmig ausgebildeter Lagerdeckel 6 vorgesehen, der am Lagergehäuse 3 befestigt ist. Zwischen der oberen Lagereinheit 4 und der Schleudertrommel sowie zwischen der Welle 2 und der anderen Seite des Lagerdeckels 6 ist eine Vorkammer 9 gebildet, die ebenfalls mit einem entsprechenden Schutzgas gefüllt ist. Die zugehörigen Dichtungen, mit denen die Vorkammer 9 abgedichtet ist, sind in Figur 1 nicht dargestellt. Auch die Vorkammer 9 weist geeignete Gaszuführ- und Gasabführeinrichtungen auf, die hier als Bohrungen durch den Lagergehäusedeckel 6 ausgebildet sind (nicht gezeigt).

Bei der hier dargestellten Ausführungsform sind der Ringraum 7 und die Vorkammer 9 nicht an einen zugehörigen Schutzgaskreis angeschlossen. Vielmehr werden beide mit einem unter Druck stehenden Schutzgas, hier Druckluft, beaufschlagt, wobei das Schutzgas den Ringraum 7 und die Vorkammer 9 durchströmt und über die entsprechenden Abführungen an die Atmosphäre abgeführt wird. Der mit Kühlmittel gefüllte Ringraum 8 ist an einen Kühlmittelkreis mit einer entsprechenden Kühlmittelumwälzeinrichtung angeschlossen.

Die mit Schutzgas gefüllte Vorkammer 9 und der mit Schutzgas gefüllte Ringraum 7 dienen zur Abführung der in der Lagereinrichtung erzeugten Wärmeenergie. Das Schutzgas nimmt die Wärmeenergie auf und führt diese an die Atmosphäre ab. Durch den mit Kühlmittel gefüllten Ringraum 8 findet eine Kühlung des im Ringraum 7 und auch in der Vorkammer 9 befindlichen Schutzgases statt.

Ein schematisch bei 12 dargestellter Sensor misst die Temperatur des Kühlmittels im Ringraum 8 und gibt entsprechende Temperatursignale an eine Steuereinrichtung 13 weiter. Die Steuereinrichtung 13 steuert die nichtgezeigte Umwälzeinrichtung für das Kühlmittel an. In Abhängigkeit von der vom Sensor 12 gemessenen Temperatur bewirkt die Steuereinrichtung 13 einen Betrieb der Umwälzeinrichtung, so dass, je nach Temperatur, das Kühlmittel durch den Ringraum 8 umgewälzt wird.

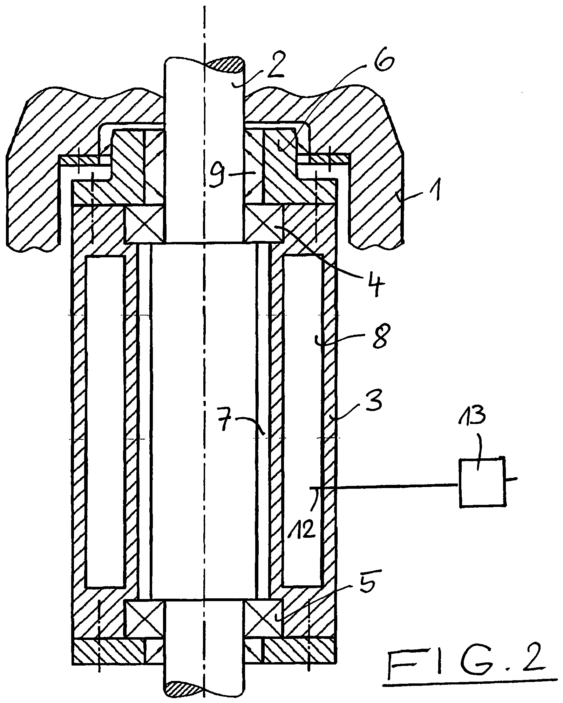

Figur 2 zeigt eine Vertikalschnittdarstellung in größerem Maßstab des als Patronenlager ausgebildeten Wellenlagers. Man erkennt den mit Schutzgas gefüllten Ringraum 7 zwischen den beiden Lagereinheiten 4, 5, die mit Schutzgas gefüllte Vorkammer 9 zwischen der oberen Lagereinheit 4 und der Schleudertrommel 1, das als Doppelmantel ausgebildete Lagergehäuse 3 mit dem darin angeordneten Ringraum 8 sowie die durch Pfeile schematisch angedeuteten Dichtungen in der Vorkammer 9. Ein schematisch angedeuteter Sensor 12 misst die Temperatur des Kühlmittels im Ringraum 8 und gibt diese Signale an eine Steuereinrichtung 13 weiter, die eine nichtgezeigte Umwälzeinrichtung für das Kühlmittel betätigt.

Die Schutzgaszuführ- und Schutzgasabführeinrichtungen sowie die Kühlmittelzuführ- und Kühlmittelabführeinrichtungen sind hierbei nicht dargestellt.

Die hier beschriebene Vorkammer 9 ist in eine sich im Wesentlichen radial erstreckende große Vorkammer und eine sich im Wesentlichen axial erstreckende kleine Vorkammer aufgeteilt. Die große Vorkammer weist einen radial äußeren sich axial erstreckenden Abschnitt auf, in dem eine durch einen Pfeil angedeutete Dichtlippe angeordnet ist. Die Dichtlippe verhindert, dass Schmiermittel oder Partikel aus dem Lagerbereich in den Prozessraum eindringen können. Bei erhöhtem Druck kann auch Produkt in die entsprechende Vorkammer eindringen, was durch die vorgesehenen Dichtungen verhindert wird. Eine in Figur 2 nichtdargestellte Leckagebohrung im Lagerdeckel 6 führt austretendes Prozessgut oder Schmiermittel ab, was über eine geeignete Sensorik (nicht gezeigt) zu Prüfungszwecken erfasst werden kann.

## Patentansprüche

1. Zentrifuge mit einem stationären Außengehäuse (20), einer im Außengehäuse (20) angeordneten und fliegend gelagerten Schleudertrommel (1), einem Lagergehäuse (3), einer vertikal angeordneten, sich von unten durch das Lagergehäuse (3) erstreckenden Welle (2) zum Rotierenlassen der Schleudertrommel (1) und einem am Lagergehäuse (3) angeordneten Lager für die Welle (2), das eine obere und eine untere Lagereinheit (4, 5) umfasst, die im Abstand voneinander angeordnet sind,
wobei
zwischen der oberen und unteren Lagereinheit (4, 5) und zwischen Lagergehäuse (3) und Welle (2) ein mit einem Schutzgas gefüllter Ringraum (7) mit einer Gaszuführ- und einer Gasabführeinrichtung vorgesehen ist,
das als Doppelmantel ausgebildete Lagergehäuse (3) benachbart zu dem mit Schutzgas gefüllten Ringraum (7) einen mit einem Kühlmittel gefüllten Ringraum (8) mit einer Kühlmittelzuführ- und Kühlmittelabführeinrichtung aufweist,
zwischen der oberen Lagereinheit (4) und der Schleudertrommel (1) und zwischen Welle (2) und Lagergehäuse (3) eine mit Schutzgas gefüllte Vorkammer (9) mit einer Gaszuführ- und einer Gasabführeinrichtung angeordnet ist,
der mit Kühlmittel gefüllte Ringraum (8) mit einem Kühlmittelkreis und einer Kühlmittelumwälzeinrichtung in Verbindung steht,
der mit Schutzgas gefüllte Ringraum (7) und/oder die mit Schutzgas gefüllte Vorkammer (9) mit einem Schutzgaskreis und einer Schutzgasumwälzeinrichtung in Verbindung stehen
und
die Zentrifuge eine Sensorik (12) zur Erfassung der Temperatur und/oder des Druckes des Kühlmittels und/oder des Schutzgases und eine von der Sensorik (12) angesteuerte Steuereinrichtung (13) zur Betätigung der Kühlmittel- und/oder Schutzgasumwälzeinrichtung in Abhängigkeit von der von der Sensorik (12) erfassten Kühlmittel- und/oder Schutzgastemperatur und/oder des entsprechendes Druckes aufweist.

2. Zentrifuge nach Anspruch 1, **dadurch gekennzeichnet, dass** die Schutzgasabführeinrichtung des mit dem Schutzgas gefüllten Ringraumes (7) von der Fett/Ölablassbohrung einer Lagereinheit (4, 5) gebildet ist.

3. Zentrifuge nach einem der Ansprüche 1 oder 2, **dadurch gekennzeichnet, dass** der Kühlmittelkreis und/oder der Schutzgaskreis einen Wärmetauscher enthalten.

4. Zentrifuge nach einem der vorangehenden Ansprüche, **dadurch gekennzeichnet, dass** die Lagereinheiten (4, 5) mit einer Sensorik zur Temperaturüberwachung versehen sind.

5. Zentrifuge nach einem der vorangehenden Ansprüche, **dadurch gekennzeichnet, dass** die Welle mindestens eine Gleitringdichtung aufweist.

6. Zentrifuge nach einem der vorangehenden Ansprüche, **dadurch gekennzeichnet, dass** das Schutzgas und/oder Kühlmittel der beiden Ringräume (7, 8) und/oder der Vorkammer (9) unter erhöhtem Druck stehen.

7. Zentrifuge nach einem der vorangehenden Ansprüche, **dadurch gekennzeichnet, dass** sie eine Einrichtung zur Erfassung des Schutzgas- und/oder Kühlmittelstandes und/oder -verbrauches aufweist.

## Claims

1. A centrifuge comprising a stationary outer casing (20), a centrifugal drum (1) arranged in the outer casing (20) and mounted in a flying manner, a bearing casing (3), a shaft (2) for rotating the centrifugal drum (1) which is vertically arranged and extends to the bearing casing (3) from below, and a bearing for the shaft (2) arranged at the bearing casing (3) and having an upper bearing unit and a lower bearing unit (4,5) which are spaced from one another
wherein
an angular space (7) with gas supply means and gas discharge means and filled with a protective gas is provided between the upper bearing unit and the lower bearing unit (4,5) and between the bearing casing (3) and the shaft (2),
the bearing casing (3) formed as double jacket has, adjacent to the annular space (7) filled with protective gas, an annular space (8) filled with a coolant and having coolant supply means and coolant discharge means,
a pre-chamber filled with a protective gas and provided with gas supply means and gas discharge means is arranged between the upper bearing unit (4) and the centrifugal drum (1) and between the shaft (2) and the bearing casing (3),
the annular space (8) filled with a coolant is connected to a coolant circuit and a coolant circulation device,
the annular space (7) filled with protective gas and/or the pre-chamber (9) filled with protective gas are connected to a protective gas circuit and to a protective gas circulation device,
and
the centrifuge has a sensor unit (12) for detecting the temperature and/or the pressure of the coolant and/or of the protective gas and a control device (12) controlled by the sensor unit (12) for the actuation of the coolant and/or protective gas circulation device in response to the coolant and/or protective gas temperature and/or the corresponding pressure detected by the sensor unit (12).

2. The centrifuge according to claim 1, **characterised in that** the protective gas discharge means of the annular space (3) filled with protective gas is formed by the fat/oil discharge bore of a bearing unit (4, 5).

3. The centrifuge according to one of the claims 1 or 2, **characterised in that** the coolant circuit and/or the protective gas circuit contain a heat exchanger.

4. The centrifuge according to one of the preceding claims, **characterised in that** the bearing units (4,5) are provided with a sensor unit for supervising the temperature.

5. The centrifuge according to one of the preceding claims, **characterised in that** the shaft has at least one slide ring seal.

6. The centrifuge according to one of the preceding claims, **characterised in that** the protective gas and/or the coolant of the two annular spaces (7,8) and/or of the pre-chamber (9) have an increased pressure.

7. The centrifuge according to one of the preceding claims, **characterised in that** it includes a device for detecting the protective gas and/or coolant level and/or the protective gas and/or coolant consumption.

## Revendications

1. Centrifugeuse présentant une enveloppe externe stationnaire (20), un panier centrifuge (1) agencé dans l'enveloppe externe (20) et monté en porte-à-faux, un logement de palier (3), un arbre (2) agencé verticalement et s'étendant depuis le bas à travers le logement de palier (3) pour faire tourner le panier centrifuge (1) et un palier pour l'arbre (2) agencé dans le logement de palier (3), qui comprend une unité de palier supérieure et une unité de palier inférieure (4, 5), qui sont agencées à distance l'une de l'autre,
dans laquelle :
il est prévu entre les unités de palier supérieure et inférieure (4, 5) et entre le logement de palier (3) et l'arbre (2) un espace annulaire (7) rempli d'un gaz de protection avec un dispositif d'amenée de gaz et un dispositif d'évacuation de gaz,
le logement de palier (3) conformé en double enveloppe voisine de l'espace annulaire (7) rempli de gaz de protection comporte un espace annulaire (8) rempli d'un agent réfrigérant avec un dispositif d'amenée d'agent réfrigérant et un dispositif d'évacuation d'agent réfrigérant,
entre l'unité de palier supérieure (4) et le panier centrifuge (1) et entre l'arbre (2) et le boîtier de logement (3) est agencée une préchambre (9) remplie de gaz de protection avec un dispositif d'amenée de gaz et un dispositif d'évacuation de gaz,
l'espace annulaire (8) rempli d'agent réfrigérant est en communication avec un circuit d'agent réfrigérant et un dispositif de circulation d'agent réfrigérant,
l'espace annulaire (7) rempli de gaz de protection et/ou la préchambre (9) remplie de gaz de protection sont en communication avec un circuit de gaz de protection et un dispositif de circulation de gaz de protection,
et
la centrifugeuse comporte un système de capteurs (12) pour recueillir la température et/ou la pression de l'agent réfrigérant et/ou du gaz de protection et un dispositif de commande (13) commandé par le système de capteurs (12) afin de commander le dispositif de circulation d'agent réfrigérant et/ou le dispositif de circulation de gaz de protection en fonction de la température de l'agent réfrigérant et/ou du gaz de protection recueillie par le système de capteurs (12) et/ou de la pression correspondante.

2. Centrifugeuse selon la revendication 1, **caractérisée en ce que** le dispositif d'évacuation de gaz de protection de l'espace annulaire (7) rempli de gaz de protection est formé par l'orifice d'évacuation de graisse/huile d'une unité de palier (4, 5).

3. Centrifugeuse selon l'une quelconque des revendications 1 ou 2, **caractérisée en ce que** le circuit d'agent réfrigérant et/ou le circuit de gaz de protection contient ou contiennent un échangeur de chaleur.

4. Centrifugeuse selon l'une quelconque des revendications précédentes, **caractérisée en ce que** les unités de palier (4, 5) sont pourvues d'un système de capteurs pour contrôler la température.

5. Centrifugeuse selon l'une quelconque des revendications précédentes, **caractérisée en ce que** l'arbre présente au moins une garniture étanche à anneau glissant.

6. Centrifugeuse selon l'une quelconque des revendications précédentes, **caractérisée en ce que** le gaz de protection et/ou l'agent réfrigérant des deux espaces annulaires (7, 8) et/ou de la préchambre (9) sont sous pression élevée.

7. Centrifugeuse selon l'une quelconque des revendications précédentes, **caractérisée en ce qu'**elle présente un dispositif pour recueillir le niveau et/ou la consommation de gaz de protection et/ou d'agent réfrigérant.
